Europäisches Patentamt

(19) European Patent Office

Office européen des brevets

(11) Publication number: **0 221 336 B1**

## (12) EUROPEAN PATENT SPECIFICATION

(45) Date of publication of patent specification: **05.05.93**

(51) Int. Cl.5: **C08J 5/08**, C08L 67/02, C08K 9/00

(21) Application number: **86113363.5**

(22) Date of filing: **29.09.86**

(54) Process for producing stampable laminates of glass fiber reinforced poly(ethylene terephthalate) and stamped molded parts.

(30) Priority: **04.10.85 US 784075**

(43) Date of publication of application:
**13.05.87 Bulletin 87/20**

(45) Publication of the grant of the patent:
**05.05.93 Bulletin 93/18**

(84) Designated Contracting States:
**BE CH DE FR GB IT LI NL**

(56) References cited:
**EP-A- 0 024 895**
**US-A- 4 044 188**
**US-A- 4 457 970**
**US-A- 4 469 543**

(73) Proprietor: **PPG INDUSTRIES, INC.**
**One PPG Place**
**Pittsburgh Pennsylvania 15272(US)**

(72) Inventor: **Raghupathi, Narasimham**
**3978 Mury Highland Circle**
**Murrysville, PA 15688(US)**
Inventor: **Carley, Earl P.**
**484 Hillview Drive**
**New Kensington, PA 15068(US)**

(74) Representative: **Sternagel, Hans-Günther, Dr.**
**et al**
**Patentanwälte Dr. Michael Hann Dr. H.-G.**
**Sternagel Sander Aue 30**
**W-5060 Bergisch Gladbach 2 (DE)**

## Description

The present invention is directed to a process for producing stampable laminates and molded parts, wherein the glass fiber reinforcement and poly(ethylene terephthalate) allow for molding of complex parts.

Poly(ethylene terephthalate), hereinafter referred to PET as a homopolymer and as a copolymer, has been reinforced with glass fibers for sundry molding applications. For example, chopped glass fiber strands reinforce PET in producing injection molded products. Also continuous glass fiber strands have been used in a compression molding operation, where the molding is at a temperature below the melting point and above the glass transition temperature of the PET.

In the latter process described in EP − A − 0024895, molding occurs by thermoforming which utilizes essentially amorphous PET. Thermoforming cannot utilize laminates having crystalline PET because this PET must be melted before molding. The melting point of PET is in the range of 255°C to 265°C, which is much higher than most thermoplastic resins. Molten PET has a disadvantage in that it is subject to degradation on contact with water. But the higher melting point of the PET makes possible a variety of higher temperature applications like fiber reinforced panels that can be painted and dried at elevated temperatures for use as automobile parts, appliance parts and the like. The thermoforming process of the European Patent Application allows for the production of the laminates of PET to take advantage of the higher melting point of the PET in molded products without incurring any disadvantage of degradation of the PET polymer due to any chance presence of water in the molding operation. Unfortunately, one snag in this tapestry of possibility is the difficulty in producing molded parts and articles having additional or complex design features or shapes.

Generally, the fiber reinforced thermoplastic polymers have glass fibers of various shapes, sizes, configurations and chemical treatments. The glass fibers as chopped strands can be used for injection molding and for compression molding, while the continuous strand can be used for compression molding. Also chopped and/or continuous strand mats are used where the mat has the construction of: loose, chopped or continuous strand and/or intermingled and/or bonded chopped and/or continuous strands. The mechanical and/or chemical bonding of the strands in the mat provides the mat with some integrity between the strands. An example of a mechanically bound glass fiber strand mat is a needled mat of continuous strands or long chopped glass fiber strands or a mixture thereof. An illustration of a continuous strand mat which is needled is that given in U S − A − 4,335,176 (Baumann). The production and use of intermingled and/or bonded mats present considerations different from those presented by the production and use of entirely loose chopped or continuous strand mat.

US − A − 4,457,970 refers to glass fiber reinforced thermoplastics wherein the glass fibers comprise the dried residue of an aqueous chemical treating composition. The treating composition comprises a vinyl − containing coupling agent in an amount of at least 0.05 weight percent of the aqueous treating composition, an epoxidized thermoplastic polymer or copolymer and an organo − reactable silane coupling agent or an interaction product of the epoxidized polymer or copolymer and said organo − reactable coupling agent and a glass fiber lubricant and optionally a crosslinkable film forming polymer. The treated glass fibers have an amount of the treating composition thereon of at least 0.3 weight percent of the treated strand.

From US − A − 4,044,188 a stampable reinforced thermoplastic polymer composite is known comprising as characterizing constituents (1) thermoplastic resin, (2) short reinforcing fibers, (3) long or continuous glass fibers and (4) a particulate filler. The composite has zones of different composition to improve the characteristics. There is mentioned that the glass fiber may be treated with a standard aqueous sizing composition comprising a film former, a lubricant, a coupling agent, an emulsifying or dispersing agent. The preferred coupling agents are organosilicon compounds.

The mats with continuous and/or chopped strands that are intermingled and/or bonded require the strands in the mat to have good processability in producing the mat, while requiring the glass fibers to have good interfacial contact with the matrix polymer in the laminate that is molded into parts and articles. The processability of the strand into the mat involves: removing the strand from a source of the glass fiber strand, dispersing the strand into a mat, and intermingling or bonding some strands to each other. The good interfacial contact between the mat and the matrix polymer is best produced in a molding operation that allows the polymer to flow into and around and through the mat and also by a molding operation that allows the mat to flow to conform to the configuration of the mold. The highest degree of interfacial contact between the matrix polymer and the mat is achieved when the thermoplastic polymer is in a melted state immediately prior and/or during the molding step. This is especially the case for the higher molecular weight thermoplastic polymers, like polypropylene.

It is an object of the present invention to provide a process of producing laminates of glass fiber reinforced poly(ethylene terephthalate) and molded parts thereof, where the PET and glass fiber reinforce −

ment have good flowability in molding, but where water degradation of molten PET is minimized.

It is an additional object of the present invention to provide a process of producing laminates of glass fiber reinforced poly(ethylene terephthalate) that can be molded into parts and articles having additional or complex design features and shapes.

This object is attained by a process for producing molded glass fiber reinforced poly(ethylene terephthalate) – containing articles where one or more needled mats of glass fibers are laminated with dried poly(ethylene terephthalate) in one or more layers, the laminate is molded under pressure at a temperature in the range of 120°C to 220°C (250°F to 325°F) with a dwell time of less than 60 seconds whereby the heated laminate cools and develops crystallinity characterized by

(a) treating the formed glass fibers with an aqueous chemical treating composition comprising

1. organic silane coupling agents selected from epoxy – functional, organo silane coupling agents and a mixture of epoxy – functional and aminofunctional organo silane coupling agents present in an amount of 0.1 to 2 weight percent of the solids of the aqueous chemical treating composition,

2. polyamino amide cationic lubricant which is a partially amidated polyalkylene amine prepared by condensation with fatty acids, where at least one of the fatty acids is pelargonic acid present in an amount of 1 to 3 weight percent of the solids of the aqueous chemical treating composition,

3. an aqueous soluble, dispersible or emulsifiable bisphenol polyester resin film forming polymer present in an amount of the remainder of the solids of the aqueous chemical treating composition and

4. water in an amount to give total solids of the aqueous chemical treating composition in the range of 1 to 20 weight percent wherein the dried residue is present on the glass fibers in an amount of 0.1 to 8 weight percent LOI,

(b) gathering the glass fibers into one or more strands and forming into layers of strands on a moving horizontal surface where the layers are dried to have a substantially reduced moisture content and are needled into mat,

(c) drying the needled mat in a second drying step to remove residual moisture to result in a moisture content of less than 0.3 weight percent of the mat,

(d) modifying the rate of crystallization of the dried poly(ethylene terephthalate) to have a rate of crystallization to yield about at least 30 weight percent crystallization at a temperature of 120°C to 220°C in 5 to 60 seconds and

(e) laminating the one or more needled mats with the modified poly(ethylene terephthalate) where the lamination temperature is above the melting point of the poly(ethylene terephthalate) for an effective laminating residence time,

(f) cooling the laminate to a temperature of at least around 66°C (150°F) at a rate to produce at least 30 percent crystallinity in the laminate,

(g) dimensioning the laminate to suit the volume and dimensional requirements of the finished molded piece,

(h) heating the dimensioned laminate to the melting point of the PET at a rate to drive off any moisture from the laminate before reaching the melting point of the PET,

(i) developing during molding and cooling of the heated laminate a crystallinity of at least 30 weight percent.

The object is also obtained by use of an aqueous chemical treating composition which differs from the composition mentioned above in that gamma glycidylpropyltrimethoxy silane is present as an organic silane coupling agent in an amount of 2 to 5 weight percent of the solids of the aqueous chemical treating composition instead of an amount of 0.1 to 2 weight percent of organic silane coupling agents selected from epoxy – functional, organo silane and a mixture of epoxy – functional and amino – functional organo silane coupling agents.

Preferred embodiments of the invention are disclosed in claims 3 to 14.

The process utilizes chemically treated glass fibers that have a moisture reduced residue of an aqueous chemical treating composition. This composition, in addition to water, comprises at least one thermoplastic epoxy and/or polyester film forming polymers having a thermal decomposition temperature greater than around 300°C in an effective film forming amount, at least one organo silane coupling agent, and at least one cationic glass fiber lubricant as specified above. The glass fibers are produced directly or indirectly into the mat of intermingled strands. In direct production, the glass fibers are formed from bushings, chemically treated, gathered into strands and deposited into layers for the formation of the intermingled mat. In the indirect production, the glass fibers are formed from bushings, chemically treated, gathered into strands and collected into forming packages. A plurality of the forming packages are dried to a moisture content in the range of 5 to 8 weight percent and the strands from a plurality of packages are deposited into layers for production of the intermingled mat.

The modified PET is a PET having an increased rate of crystallization through the addition of nucleating agents or any other method known to those skilled in the art.

The glass fiber reinforced PET laminates with crystallinity or pieces thereof are processed into parts or articles by preheating and molding at elevated temperatures sufficient to permit crystallization. The preheating occurs at a temperature sufficient to melt the PET in the laminate and at a rate and in an environment that allows for any moisture to leave the laminate. The preheated laminates are molded at a temperature in the range of 120° to 220°C for 5 to 60 seconds to result in a molded glass fiber reinforced PET part or article having at least 30 percent crystallinity.

## BRIEF DESCRIPTION OF THE DRAWING

While the novel features of the invention are set forth more particularly in the appended claims, a full and complete understanding of the invention may be had by referring to the detailed description as set forth hereinafter and as may be seen in the accompanying drawings in which:

FIG. 1 is a diagrammatic front view of an operation to produce glass fibers and packages of glass fiber strands.

FIG. 2 is a diagrammatic isometric view of an operation to make intermingled mat which is needled, continuous strand mat.

FIG. 3 is a diagrammatic isometric view of another embodiment of the operation to make needled, continuous strand mat.

FIG. 4 is a diagrammatic illustration of equipment laminating mat products produced in FIGS. 2 or 3 with poly(ethylene terephthalate) resin to produce PET reinforced laminates and equipment for molding the laminates into articles or parts.

## DETAILED DESCRIPTION OF THE INVENTION

The production of stamped parts of glass fiber reinforced poly(ethylene terephthalate), PET, is not achieved easily for parts having added or complex designs, features, or shapes. Added features or shapes such as ribs, bosses, cord holes and the like and complex designs for parts require flowability of both the PET and the reinforcement during molding. Although thermoforming offers a reduced risk of water degradation of the PET, it only allows for stretching of the PET in molding and it does not provide the best flowability for molding reinforced parts with additional or complex designs, features and shapes. We found that good flowability of both the reinforcement and PET is achievable without incurring the penalty of increased risks of water degradation of the molten PET when the PET is molded from its molten state. This discovery is applicable even to molding of the laminates of glass fiber reinforced PET at locations remote from the laminate production facility and even after lengthy periods of transportation. This is surprising since we first contemplated overcoming any penalty of water degradation of the PET in molding of the laminates by wrapping the laminates in a water-proof membrane. Such a water impermeable film or layer would have protected the laminates of glass fiber reinforced PET during lengthy transportation to molding facilities remote from laminate production facilities. Although the wrapping of the laminates with the water impermeable membrane can be done to insure maximum protection against water degradation of the PET in molding of the laminate, it is not necessary to perform the wrapping step to minimize the water degradation of the PET in molding to acquire molded PET parts or articles having good physical properties.

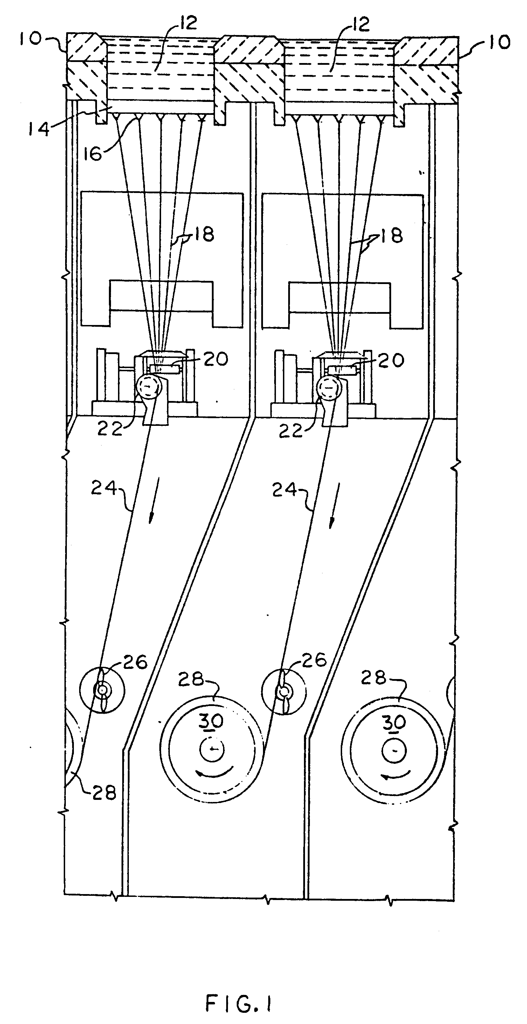

As shown in FIG. 1, a furnace, 10, contains molten fiberizable glass 12. The molten glass flows through tips, 16 in a bushing, 14 to form fibers, 18. The fibers are drawn across an applicator, 20 to apply an aqueous chemical treating composition to the glass fibers. Afterwards, the chemically treated glass fibers are gathered into a strand, 24, by gathering shoe 22. The strand, 24 is pulled onto a forming package 28 on winder 30 by guide spiral 26.

The glass fibers are treated with an aqueous chemical treating composition during or after their formation wherein the aqueous treating composition can have three major nonaqueous components in addition to water. One of these components is an aqueous soluble, dispersible or emulsifiable bisphenol polyester resin film forming polymer that is both compatible with and soluble in the PET polymeric matrix. The compatibility and solubility are such that the treated glass fibers have good wet-out in the PET matrix polymer when the fibers and matrix polymer are intimately contacted. The film forming polymer has a thermal decomposition temperature greater than around 300°C. Preferably, the film forming polymer forms a film upon evaporation of water and any solvents or upon curing that has limited tackiness and that is tough. The characteristics of limited tackiness of the film forming polymer contributes to limited tackiness of the dried residue of the aqueous chemical treating composition. The film of the dried residue of the

EP 0 221 336 B1

aqueous treating composition has a less tacky characteristic than a film of any polymer like Epon® 828 resin which is an epoxy-polyester resin. The toughness of the film enables the formation of a near continuous film on the surface of the glass fibers. In achieving such a film characteristic, there is no penalty of reducing, to any great extent, the wettability of the treated glass fibers.

Two other components that are present include: one or more epoxy-containing organo-functional coupling agents in an amount of 0.1 to 2 weight percent of the solids of the aqueous chemical treating composition which is an effective coupling agent amount with or without the presence of amino-containing organofunctional coupling agents and a glass fiber polyamino amide cationic lubricant. The coupling agents can be organo-functional silane coupling agents or organo-functional Werner compounds and the like having one or more epoxy moieties on the organofunctional portion of the molecule.

The glass fiber cationic lubricant is present in an amount of 1 to 3 weight percent of the solids of the aqueous chemical treating composition which is an effective lubricating amount. The lubricants are those that are cationic in nature and which impart lubricity to the glass fibers and gathered bundles of glass fibers and strands.

Although these components may be used with additional components such as film formers, nonionic lubricants, wetting agents and the like in the aqueous chemical treating composition, a particularly suitable composition has three components in addition to water. This suitable chemical treating composition has an aqueous emulsion having bisphenol polyester film forming polymer as the sole film forming polymer. This emulsion is available from Savid Chemical Company, Como, Italy, under the trade designation Neoxil® 954 emulsion. The bisphenol polyester or esterified epoxy film forming polymer has a ratio of aliphatic unsaturation to aromatic unsaturation which is preferably less than 0.1 and which is most preferably around 0.07. Also present is an epoxy functional organo silane coupling agent which may be gamma glycidoxypropyltrimethoxy silane available from Union Carbide Corporation under the trade designation A-187 silane. The amount of this specific silane coupling agent A-187 silane is in the range of 2 to 5 weight percent of the solids of the aqueous chemical treating composition. In addition, a water soluble polyamino amide cationic glass fiber lubricant is present; an example of which is the Emerylube® 6717, which is present in an amount of 1 to 3 weight percent of the solids of the aqueous chemical treating composition. The amount of water which is present is that sufficient to give a total solids suitable for treating glass fibres which is from 1-20 weight percent, preferably from 1 to 15 weight percent of the aqueous chemical treating composition. The amount of the bisphenol polyester resin is the remainder of the solids from the amounts of the coupling agent, and lubricant. The pH of the aqueous chemical treating composition is generally less than 7; for example, a range of 4.5 to 6.2 is preferred.

The aqueous chemical treating composition can be prepared by hydrolyzing the gamma glycidoxypropyltrimethoxy silane with acetic acid in an amount of about 1 milliliter of acetic acid for about 20 grams of the silane in a premix tank. The hydrolyzation is performed by adding the acetic acid to 10 to 20 weight percent of the water to be used in preparing the chemical treating composition and by adding the silane to this mixture with stirring until complete hydrolyzation occurs. The cationic glass fiber lubricant is added to hot water 76.7˚C (170˚F) with stirring, where the amount of water is about 1 percent of the total amount of water used in preparing the aqueous chemical treating composition in a premix tank. The aqueous emulsion of the bisphenol polyester is about 46 percent solids is combined with about twice its weight of water in a main mix tank. The hydrolyzed silane and glass fiber lubricant are added to the main mix tank. A small amount of antifoaming agent like SAG, a silicone antifoaming agent, 10 can be added and the mix which has been agitated is diluted to the final desired volume with water. The final pH of the aqueous chemical treating composition is then adjusted to be in the range of 4.5 to 6.5 with a compatible organic acid such as acetic acid.

The aqueous chemical treating composition is applied to the glass fibers where the fibers can have any diameter known to those skilled in the art. The aqueous chemical treating composition is applied to the glass fibers to give an add-on of the chemical treating composition in the range of 0,1 preferably from 0.5 to 2 weight percent LOI (Loss on Ignition).

A plurality of the forming packages, 28 of the glass fiber strands of FIG. 1 are dried to reduce the moisture content of the strand to less than around 8 weight percent and preferably less than 1 weight percent. The drying to less than around 1 weight percent moisture can occur by placing the plurality of forming packages in a Michigan® oven at a temperature in the range of 66˚C to 104˚C (150˚F to 220˚F) for 4 to 10 hours. Also the packages can be air dried to achieve the desired moisture content. Also the packages can be partially dried in an oven or by air drying so that the moisture content of the strands is in the range of 5 to 8 weight percent. This level of moisture gives an adequate payout of the strands from the forming package for deposition into layers to form an intermingled mat, preferably a needled mat. Before the mat is needled, the moisture content of the strand should be less than 1 weight percent, and any

5

additional drying that is required to meet such a moisture content can occur while the strands are in the layers prior to needling.

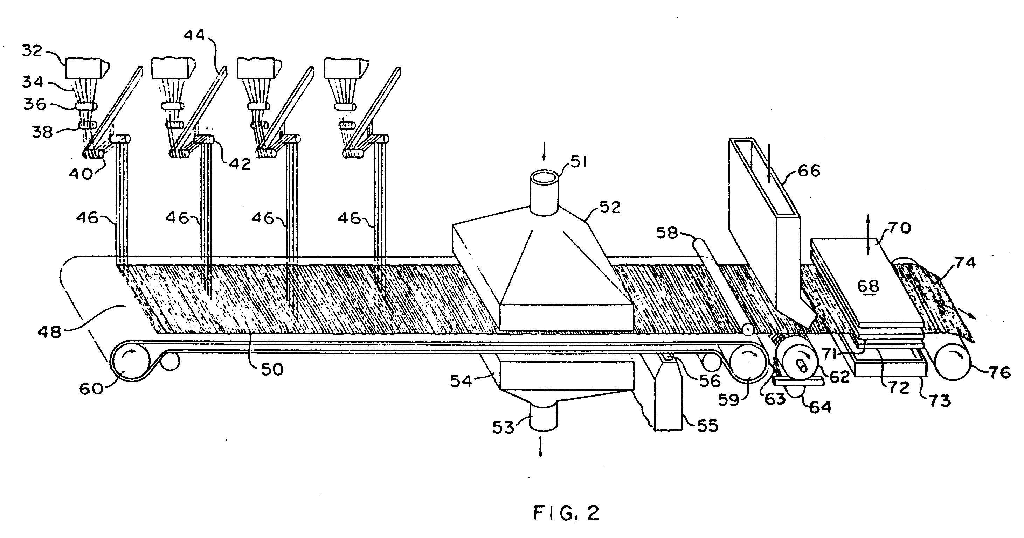

As shown in FIG. 2, the glass fibers can be formed and directly produced into layers of continuous strands for production of the needled mat. In FIG. 2, individual glass fibers 34 are drawn from a bushing 32 and passed over an applicator 36. The applicator, such as a roller applicator applies a suitable size like the aforementioned size to the fibers 34. The chemically treated fibers are passed over a gathering shoe 38 which is a cylinder having a plurality of grooves through which the fibers 34 are drawn together thus forming strands 39. The gathering shoe is formed from a material which has sufficient lubricative properties such that the filaments may be gathered without breakage. Graphite is a particularly suitable material for construction of a gathering shoe, however, other materials with the proper lubricity may be used. The strands 34 are passed over an idler roller, 40 which directs the strands, 34 toward a particular attenuator 42. The attenuator 42 is mounted on its particular track 44 which can be made of a channel properly constructed to allow the attenuator 42 to traverse in a horizontal path perpendicular to the long axis of conveyor 48, depositing the strands 46 in a random pattern on the surface of conveyor 48. As the strands 46 from a plurality of forming positions are deposited on the conveyor 48, they form layers of continuous strands having a desired depth and typically containing moisture in the range of 20 percent or less, typically 12 to 15 percent from the forming process. When the strands are being fed from forming packages, the moisture content is usually 8 percent or less, typically 4 to 6 percent. The layers of continuous glass fiber strands, 50 are continuously passed through an oven, 52. The oven, 52 is connected to a duct, 51 which provides hot air from any heater (not shown) known to those skilled in the art and preferably a resistance heater. The heated gas which is preferably air goes into the hood of the oven which covers the mat conveyor, 48, across its width and extends a distance along the length of the conveyor sufficient to provide a residence time for the layers in the oven proper 15 to 120 seconds, preferably 70 to 90 seconds. In addition, duct 51 can be fed with air at a relative humidity of 60 percent or less, typically at least 20 percent and below 60 percent, and preferably 40 to 50 percent. The air passes from duct 51 through the hood of the oven and through the layers of continuous strand. The air after passage through the layers, 50 is exhausted through chamber 54 to duct 53.

The layers of continuous strand 50 after passing through the oven, 52, is conveyed over an elongated duct, 55 which has a slot – like opening, 56, which extends across the width of the layers, 50. Duct 55 is also provided with heated gas from a heater (not shown) where the gas again, preferably air, is controlled to provide low relative humidity, i.e., 60 percent or less, typically at least 20 percent and below 60 percent. The preferred air stream is passed into contact with the under surface of the layers, 50, and removes from the surface residual moisture that tends to collect on the bottom surface strands and those close to that surface as a result of the drying in oven 52.

The layers 50 are then passed between nip roll, 58 and drive roll, 59, which with roll, 60 is used to continuously advance conveyor 48 through the continuous strand layer forming area. Drive roll, 62, and chain, 63, associated therewith and idler roll, 64 around which the chain rides, are operated at speeds to draft the layers of continuous strand 50 from nip roll 58 to the desired density. Thus, the layers, 50, at whatever thickness can be stretched by chain, 63, provides continuous strand layers of lower density than the layers between rolls 58 and 59, if desired.

The layers of continuous strand, 50 are conveyed from the surface of the chain, 63, to the needler, 68. As shown, the needler, 68 has a needle board, 70, to which are affixed a plurality of needles typically arranged in parallel rows. The needler, 68 is provided with a stripper plate, 71 with appropriate drilled holes arranged in rows so that the needles can readily pass through them during needling. A bed plate, 72 is also provided in needler, 68 which also has a plurality of holes arranged in rows and sized so that the needles of the needle board may pass through them. Plate 72 also serves as a surface on which the layers of continuous strands, 50 rest during their passage through the needler, 68. The needle board, 70 reciprocates as depicted by the arrows to push the needles through the layers of continuous strands and through both plates 71 and 72 to thereby intermingle or entangle the strands in the layers to form a needled mat, 74. The needled mat, 74 is removed from the needler by drive roller, 76 which exerts a pulling force on the mat. Track 73 is supplied to catch broken glass filaments passing through the holes in plates 71 and 72.

The needler 68 and in particular, the needling zone, i.e., the area between plates 71 and 72 in needler 68, preferably is environmentally controlled to maintain that zone at temperatures of between 10˚C to 49˚C (50˚F to 120˚F) and a relative humidity of below 60 percent, typically at least 20 percent and below 60 percent and preferably 40 to 60 percent. The environment is controlled by continually passing gas at low relative humidity into the needling zone from duct 66. Duct, 66, provides heated air from an associated heater (not shown). The end of duct 66 is provided with a generally rectangular slot extending the width of the needling zone to insure even distribution of low humidity gas across the entrance of the needler 68.

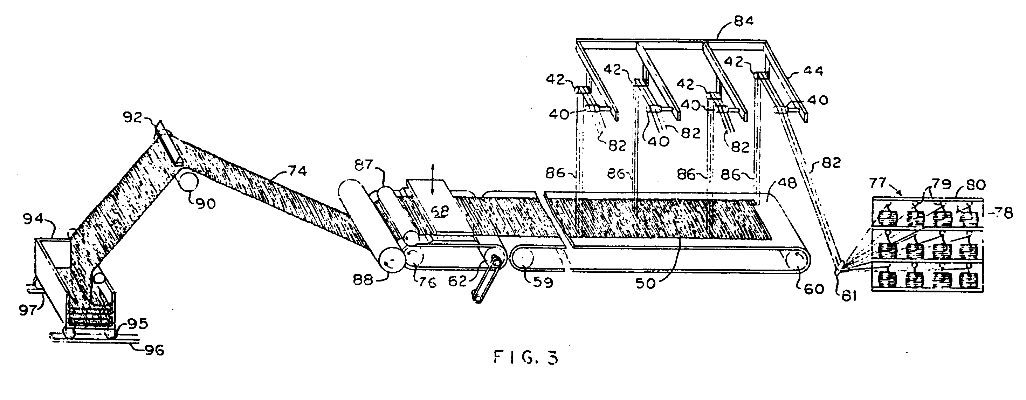

In FIG. 3, the needled mat is produced from dried forming packages of glass fiber strands. Here, similar devices to those in FIG. 2 have been numbered the same as in FIG. 2. In this figure, a creel, 77, containing the forming packages, 78, of strands, 80, is illustrated. The strands, 80, pass through guides, 79, as they leave the forming packages, 78. The strands, 80, may be combined into one or more larger strands. Preferably, however, the strands, 80 remain as separate strands as they pass to idler roll, 81 for conveyance to form a layer of strands. Preferably, the strands have a moisture content of 4 to 8 weight percent to enable their facile removal from the forming packages through the guide eyes and to reduce the possibility of static build up. The group of strands, 82 is advanced to attenuator 42 over idler roll 40 in the same manner as previously mentioned for FIG. 2. The attenuator reciprocally traverses the width of conveyor 48. Each attenuator has a supply of a group of continuous glass fiber strands, 82 from a creel containing forming packages. The attenuator traverses on attenuator track, 44 and a plurality of attenuator tracks are held in place by frame 84. The attenuators, 42 deposit the continuous strands, 86 in a random pattern to form the layers of continuous strands, 50 as in FIG. 2. In this embodiment, the ovens and hot air ducts of FIG. 2 can also be used, but preferably the strands from the forming package have the correct moisture to allow good pay – out from the forming packages. The strands air – dry in the layer of strands, 50 before entering the needler to have the correct moisture for a good needling operation in needler, 68.

This air drying combined with the drying of the forming packages removes a major portion of the moisture from the glass fiber strands so that the layers of these strands that enter the needler have a moisture content of 1 weight percent or less. Preferably, this major drying step occurs in two parts. First, the strands are dried on the forming packages, and, second, after the layers of strands are formed, the layers are dried to less than 1 weight percent moisture. The first drying step reduces the moisture of the strands to 8 percent by weight or less. Alternatively, the major drying step can occur by drying to any degree before or after forming the layers so long as the layers have some moisture of around 1 weight percent or less when the layers are intermingled.

The needler, 68 operates in the same manner as that in FIG. 2, and the needled mat, 74, leaves the needler, 68, and passes between a free – wheeling pressure roll, 87 and over the drive roll, 76, and around a tension roll, 88, which is also free – wheeling. The needled mat, 74 is then passed to free – wheeling roller, 90 which is elevated above the horizontal plane of the conveyor, 50. The mat, 74 is taken to an elevated height to allow for facile packing of the mat. As the mat, 74, passes over roller, 90 it also passes under radiant heater 92. This heater dries the needled mat to have a moisture content of less than 0.3 and preferably 0.2 weight percent of the mat, when the mat is to be used in a short time for production of the PET laminate. If longer times transpire between the production of the needled mat and the production of the PET laminate, the mat can be air dried or the mat can be dried in the process of making the laminate as will be discussed.

The dried needled mat extending downwardly from roller, 90 and radiant heater, 92 is passed over a supporting guide roll, 90 and into a collector 94. The collector, 94 reciprocates in a plane with the movement of the conveyor 48 to fold the needled mat, 74, in the collector, 94, on wheels, 95, mounted on tracks, 96 and 97.

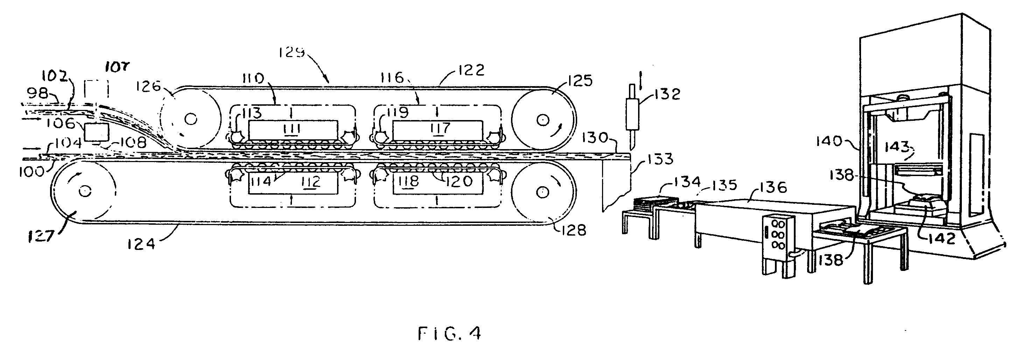

In FIG. 4, an illustration of equipment is shown that is suitable for laminating the needled mat products produced in accordance with the instant invention with modified poly(ethylene terephthalate) polymers. Thus, as is shown in the drawing, two PET resin sheets, 98 and 100 are fed to a first laminating zone, generally indicated as 110. Thorough drying of the overlays prior to lamination is needed in order to obtain good laminate properties. Preferably, the dried overlays are in rolls wrapped in a water impervious membrane before they are uncovered and used in the lamination process. The presence of moisture during lamination can give: 1) poor interfacial adhesion between the resin and the needled mat and 2) adverse reactions with PET in the melt stage. The latter effectively lowers the molecular weight and properties of the PET.

The modified PET which is used can be virgin or recycled PET modified with agents or treated to increase the rate of crystallization of the PET. Any method known to those skilled in the art for increasing the rate of crystallization of the PET can be used; for example, decreasing the molecular weight or inherent viscosity of the PET will increase the rate of crystallization, altering the structure of the PET to be a random or blocked copolymer, utilizing higher amounts of comonomer to produce the PET, increasing the rate of diffusion within the melt by adding lubricants to the PET melt, adding organic or inorganic nucleating agents, maintaining any catalyst residues of insoluble catalysts within the PET, and utilizing the PET with a prior thermal history to have a strong nucleating effect and increase the rate of crystallization at temperatures below 280˚C. It is preferred to utilize PET which has a rate of crystallization so that the PET can be stamped into parts at temperatures of 130˚ to 220˚C in a time of 20 to 60 seconds to result in stamped parts having a range of crystallinity of at least 30 to 50 percent or more. The modified PET is generally has an inherent viscosity of 0.25 to 1.5 in a solvent consisting of 60 percent phenol and 40 percent by weight tetrachloroethane. Also the PET has molecular weights ranging in weight average molecular weights from 5,000 to 60,000. The PET can be prepared by bulk or solution techniques from copolymers of vinyl aromatic compounds and/or alpha-beta unsaturated cyclic anhydrides, rubber modified copolymers, where the rubber is grafted or blended. The PET can also be in the form of copolymers with minor amounts of other copolymerizable materials, for instance, 0 to 30 mole percent of sebacate, azelate copolymers or block copolymers with poly(ethylene oxide).

It is preferred to utilize a PET homopolymer which has a faster rate of crystallization from melt by the presence of nucleating agents. Examples of such nucleating agents include: alkali metal salts of higher polar organic compounds; alkali salts of aromatic, aliphatic, unsaturated aliphatic, monocarboxylic acids, dimers or trimers or saturated carboxylic acids like $C_8$ fatty acids; alkali metal salts of aromatic carboxylic acids substituted with halogens and/or nitro groups; inorganic compounds such as boron nitride, alkali metal salts of carbonic acid, minerals like talc, mica; soaps having alkali metal salts of tallow fatty acids; ionomer resins; metal salts of carboxylic acids; metal salts of inorganic acids; alkali metal salts of oligomers or ethylene terephthalate; powders of inorganic substances such as clay, silica, alumina, titania, graphite, calcium carbonate, magnesium carbonate, zinc oxide and aluminum silicate, glass beads and the like. The amounts of the nucleating agent is properly chosen in appropriate amounts to increase the rate of crystallization. For example, the nucleating agent can be present in an amount of 0.01 to 5 percent by weight based on the weight of the polyethylene terephthalate. Also the nucleating agents can have average particle diameters of around 20 micron or less. Preferably the amount of the nucleating agent in the polyethylene terephthalate allows for production of molded parts from the PET reinforced laminate having maximum crystallinity within a period of time of less than 40 seconds at temperatures of 130°C to 210°C.

In addition, the PET polymer can have present agents to improve the resistance to cracking due to shrinkage or crystallization, rubbers of polyolefins to improve impact strength, agents to improve impact resistance, coloring agents, ultraviolet and heat stabilizing agents, opacifying agents, thermo-oxidative stabilizers like sterically hindered phenols and phenolic derivatives and fire retardants.

One or more layers of needled mat produced in accordance with FIGS. 2 and/or 3 are used in producing the PET laminate. The glass fiber reinforced PET laminate can be constructed of any number of layers of mat in conjunction with PET. In FIG. 4, two needled mats, 102 and 104 are shown in producing the reinforced PET laminate. These needled mats produced in conjunction with FIG. 3 have been dried to a moisture content of around 0.3 weight percent or less. If the mat has a higher moisture content, for instance, if the laminate is produced at a location remote from the production of the needled mat, the needled mat can be dried prior to or in conjunction with the laminating process. Any drying means known to those skilled in the art can be used before the mats contact any PET resin. For instance, in FIG. 4, one or more radiant heaters can be arranged to dry the needled mats, 102 and 104 while they are being fed into the laminating process. As shown in FIG. 4, fed in between the two dried resin sheets, 98 and 100, are two needled mats, 102 and 104. Intermediate the mats 102 and 104 fed from extruder 106 is a molten PET 108. The PET in the extruder has been dried, preferably by the dual desiccant drying system, 107, for removal of moisture from the PET pellets prior to extrusion. The resin sheets, 98 and 100, and the mats, 102 and 104 and the molten resin, 108, are passed into the hot laminating zone, 110 by belts 122 and 124. Belt 122 passes over rollers 125 and 126 and belt 124 passes over rollers 127 and 128. The belts are moved through the zone utilizing sprocket drives 113 and associated roller members, 114 to drive the belts through the machine. The hot laminating zone, 110, is operated at a temperature at least 274°C (525°F) in order to melt all of the PET in the overlayers and to allow flow of the PET into and around and through the needled mats. At this temperature in the hot zone, 110, the movement of the belts moves the PET and mat through the hot zone at a speed of 0,3 m/min. to 15,3 m/min. (1 foot to 50 feet per minute) at appropriate temperatures to melt the PET. In the hot zone, platen press members, 111 and 112, are utilized to apply pressure to the mats, 102 and 104 and the associated molten PET, 98, 100 and 108 during their passage through the zone. The product emanating from the hot zone, 110 is passed into a cold zone, 116 operated at cooler temperatures than the hot zone, 110 where the belts, 122 and 124 are moved continuously using the sprocket members, 119 and associated rollers, 120 to move the belt in a continuous straight line fashion through the cold zone. The cold zone, 116, is at a temperature sufficient to cool the modified PET from the molten state to develop at least 30 weight percent, and preferably about 50 weight percent or more, crystallization in the PET in a period of time of 5 to 60 seconds. In the cold zone, platen press members 117 and 188 apply pressure to the laminate during its passage through that zone. Preferably, the pressure supplied in both the hot zone, 110, and the cold zone, 116, are equal although pressure can be varied in each zone to independently apply greater or lesser pressures in one zone than the other. Upon cooling in zone 116, the finished sheet product, 130, is removed from the laminator, generally 129. The temperatures are controlled in the heat zone 110 and the cold zone, 116 by circulating heat transfer fluids through the respective platens in the zones or by any other method known to those skilled in the art for laminating polymers.

The reinforced PET laminate, 130 removed from the laminator, 129 is generally at a temperature of around 66°C (150°F). This laminate can be chopped into any dimensions by cutting into appropriate sizes by slitter depicted as 132 on a take−off table, 133 for reshaping into useful articles at a location near to or remote from laminate production. Preferably, the laminator 129 is operated so that the speed of the laminates, 130, coming off the laminator is around 12,2m/min (40 feet per minute.) The cut laminate, 134 can be packaged in moisture impermeable membranes for shipment to remote locations for molding, although such wrapping is not necessary.

The cut laminates, 134, can be further cut to suit volume and dimensional requirements of a finished molded piece or article. The cut laminates, 134 are fed to oven, 136 usually by means of a conveyor, 135. Preferably, oven 136 is an infrared oven, although the oven can be any oven which allows dissipation of moisture from the environment near the surface of the cut laminate, 134, commonly referred to as a blank. The heating rate is controlled so that soft blanks, 138, are in the melt phase at about 274°C (525°F) for molding. This heating rate is controlled by the speed of the conveyor through the infrared oven or in other ovens by the residence time within the oven. It is preferred that the heating rate be controlled so that the melt temperature of the PET is reached after any moisture that may be present has an opportunity to diffuse from the surface of the laminate. Most preferably, the heating rate is 1,4−1,7°C/s (2.5 to 3°F/second).

The preheated blanks, 138, are taken alone or in combination with other blanks and placed in the mold of a press machine, 140. The mold with a die 142 and a dwell space, 143 is a heated mold to allow stamping of the PET blank preferably at a temperature in the range of about 121°C to 160°C (250 to 320°F) in preferably 30 to 40 seconds. The heated blanks are positioned in the mold as it begins to close. Because the PET is in the melt state with mold closing, the blanks begin to flow. Once flow of the material begins, it should be completed before the blank cools to the temperature of the heated die. As the blank cools, the PET increases in viscosity and when the blank cools to the temperature of the heated die, the PET begins to crystallize. The speed of the press closure must be sufficient to complete the flow before crystallization is induced. A minimum pressing speed recommended for a hydraulic compression press is 508 millimeters per minute (20 inches per minute). Speeds in the range 2,032 millimeters per minute (of 80 inches per minute) are preferred. The short dwell time of generally 5 to 60 seconds and preferably of 30 to 40 seconds depending on the thickness of the molded part or article is necessary to remove the heat from the material to solidify the part and develop maximum crystallinity in the PET. After this time, the press is opened and the part is removed. The mold should be designed to be a compression mold incorporating vertical telescoping shut−off (scaling) edges and equipped with a heavy−duty guidance system. The mold can be held at its temperature through the circulation of heat transfer fluid in the die and dwell mold parts or areas.

PREFERRED EMBODIMENT OF THE INVENTION

In the preferred embodiment of the present invention, calcium aluminum borosilicate glass fibers are attenuated from molten batch. The glass fibers are coated with the aqueous chemical treating composition during the formation of the glass fibers from a multitude of orifices in a bushing of a glass−melting furnace by a belt type binder applicator.

The aqueous chemical treating composition has a single aqueous emulsion having bisphenol polyester, film forming polymer available from Savid under the trade designation Neoxil® 954 as the sole polymeric material for film formation. The bisphenol polyester or esterified epoxy film forming polymer can have a ratio of aliphatic unsaturation to aromatic unsaturation which is preferably less than 0.1 and which is most preferably around 0.07. The preferred silane coupling agent is the sole silane coupling agent of gamma glycidoxypropyltrimethoxy silane available from Union Carbide Corporation under the trade designation A−187 silane, and the amount of the A−187 silane is preferably in the range of 2.7 to 5 weight percent of the solids of the aqueous chemical treating composition. The water soluble cationic glass fiber lubricant is preferably the Emerylube® 6717 a polyamino amide type lubricant, which is present in an amount of 1 to 2.5 weight percent of the solids of the aqueous chemical treating composition. The water which is present to make up the aqueous chemical treating composition is that amount to give a total solids preferably 5 to 6 weight percent of the aqueous chemical treating composition. The amount of the bisphenol polyester resin emulsion is the remainder of the solids or nonaqueous materials from the amounts of the coupling agent, and lubricant. The pH of the aqueous chemical treating composition is preferably in the range of 4.5 to 6.2.

The aqueous chemical treating composition is prepared by hydrolyzing the gamma−glycidoxypropyltrimethoxy silane with acetic acid in an amount of about 1 milliliter of acetic acid for about 20 grams of the silane in a premix tank. The hydrolyzation is performed by adding the acetic acid to 10 to 20 weight percent of the water to be used in preparing the chemical treating composition and adding the silane to this mixture with stirring until complete hydrolyzation occurs. The cationic glass fiber lubricant is added to hot water 76.7°C (170°F) with stirring where the amount of water is about 1 percent of the total amount of water used in preparing the aqueous chemical treating composition in a premix tank. The aqueous emulsion of the bisphenol polyester as about 46 percent solids is combined with about twice its weight of water in a main mix tank. The hydrolyzed silane and glass fiber lubricant are added to the main mix tank. A small amount of antifoaming agent like SAG 10 silicone antifoaming agent can be added and the mix which has been agitated is diluted to the final desired volume with water. The final pH of the aqueous chemical treating composition is then adjusted to be in the range of 4.5 to 6.2 with a compatible organic acid such as acetic acid.

The aqueous chemical treating composition is applied to the glass fibers where the fibers have any diameter known to those skilled in the art of glass fiber manufacturing but preferably have a diameter which can range from $2{,}67 \cdot 10^{-3} - 30{,}5 \cdot 10^{-3}$ mm ($10.3 \times 10^{-5}$ to $120 \times 10^{-5}$ inch) or more. The aqueous chemical treating composition is applied to the glass fibers to give an add−on of the chemical treating composition in the range of 0,1 (preferably 0.5) to 8 (preferably to 2) weight percent LOI (Loss of Ignition). The glass fibers, which are G, K or T−fibers depending on the ultimate use of the molded parts of articles, are gathered into strands to give constructions. The strands of glass fibers are collected on a winder to produce a forming package and a plurality of the forming packages are dried in a Michigan oven at a temperature in the range of 65 − 104°C (150° to 220°F) for 4 to 10 hours to reduce the moisture content of the strand to less than one and preferably less than 0.3 weight percent.

A plurality of the glass fiber strands with the chemical treatment are conveyed from the dried forming packages to a traversing distributor to be projected downwardly in a random pattern onto a moving conveyor, preferably a wire neck chain in a manner similar to the strands from the forming packages in FIG. 3. The strands are traversed across the width of the conveyor on a continuous basis to cover the conveyor with glass fiber strands. Layers of the plurality of strands form a desired depth. The layers of dried strands conveyed to a needler such as that shown in FIGS. 2 and 3 and are needled into mechanically bonded mat having both entangled glass strands and broken strands to provide short strands and filaments in the mat. The needling also provides, when all needled barbs are positioned on the needles in the same direction, a coherent mat structure having one major surface with a dense accumulation of fibers protruding from the surface and a second major surface containing fibers protruding from the surface but having substantially less fibers than the dense major surface.

The continuous glass fiber strand needled mats emerge from the needler in a cohesive state and have sufficient mechanical integrity that they can be handled without distorting their generally flat shape. Characteristically, they contain two major surfaces, two side edges and a leading edge. The trailing edge of the mat is provided when the mat is cut after reaching a desired length. In accordance with FIG. 3, the continuous strand mat is formed continuously and is fed through the needling machine continuously. It is folded in boxes for use in laminating or rolled into large rolls for the same purpose at convenient lengths.

The continuous glass strand mats after needling are fed to a drying zone to remove residual moisture to give a moisture content of the mats to less than 0.3 and preferably less than 0.2 weight percent. As shown in FIG. 4, two needled mats are conveyed to a laminator. Two resin overlays of dried PET are passed with the two mats and a dried resin extrudate is passed between the mats. The resin was preconditioned by drying for 6 hours at 166°C (330°F) prior to lamination or overlay fabrication and maintained in a positive nitrogen pressure on the extruder hopper. The RPM in the extruder for about 35 percent glass content with $915 g/m^2$ (3.0 ounces per square foot) of mat on a $25{,}4\mu m$ (10 mil) overlay at a line speed of 4 m/min (12 feet per minute) is 88 to 90. The melt temperature for the PET is $290 \pm 8$°C ($560° \pm 15$°F) and the die lip opening is around 3mm (120 mils.) The extrusions and mats are laminated with applied pressure and at a temperature in the hot laminating zone sufficiently high to ensure the extrudate becomes molten. Preferably, the laminating temperature is 282°C to 307°C (540°F to 585°F). The residence time of lamination is long enough to ensure that the resin thoroughly impregnates the mats. The thoroughly impregnated resin glass laminate is cooled in the cooling zone at a rate of 0,5−3,4°C/s (1 to 6°F per second) to allow for the rate of crystallization to produce substantially crystallized laminates. The laminates are molded by heating the laminates to the melting point at a rate of 1.1−1.7°C/s (2.0 to 3°F per second), and molding the laminates in hot die molds. The temperature of the molding is 143°C to 177°C (290°F to 350°F) and the dwell time is less than around 60 seconds and a total residence time is 4 to 5 minutes.

The present invention is further illustrated without limiting the scope of the invention by the following examples.

Example 1

An aqueous chemical treating composition in an amount of 18.9 liters for treating glass fibers was prepared as indicated by the numerals and letters preceding the following materials in the stated amounts:

| 1A | Gamma glycidoxypropyltrimethoxy silane A − 187 | 16.3 grams |
|----|------------------------------------------------|------------|
| 1B | Acetic acid | 7.5 grams |
| 1C | Water (deionized) | 2270 grams |
| 2A | Partially amidated polyalkyleneimine cationic lubricant (Emery 6717)® | 15.1 grams |
| 2B | Water (hot) | 189 grams |
| 3A | Aqueous dispersion of bisphenol A polyester film forming polymer Neoxil® 954 − 47 ± 2% Solids | 2272 grams |

The lettered materials were added in the indicated order.

The aqueous chemical treating composition was applied to glass fibers having a T − fiber diameter and the glass fibers were gathered into strands and wound onto a forming package. A plurality of strands removed from a plurality of forming packages were used in making a needled glass fiber strand mat according to the method of the preferred embodiment. The main conveyor traveled at a speed of 2,8 m/min ± 0.61 m/min (9.2 feet per minute ± 2 feet per minute) and the needler had 123 (19) gauge needles to provide penetrations per $cm^2$ (inch squared) of 140 and a needled penetrations of 16 ± 1 millimeter. The mats were dried with infrared heaters on − line prior to being collected. The moisture of the mat was 1 percent maximum.

The laminates were made with the needled mat and polyethylene terephthalate. The PET was nucleated to have a more rapid rate of crystallization in the range of 20 to 40 seconds for complete crystallization when the PET is taken from melt to a temperature in the range of 138˚C to 160˚C (280˚F to 320˚F). Two plys of mat were dried to have a moisture content of 0.2 weight percent. These plys were contacted with 10 pieces of predried film prepared from PET pellets dried for 6 hours at 165.5˚C (330˚F) in a positive nitrogen pressure. The construction resulted from contacting was 3 pieces of PET film on each side of the two plys of mat and three pieces of film between the mats. The laminating was conducted at a temperature of around 293˚C (560˚F) with a resin temperature of 258˚C − 266˚C (396˚ to 510˚F). The laminates were cooled at a rate of 0.56˚C to 3.3˚C (1 to 6˚F) per second after they were contacted in the heating zone for a sufficient period of time to allow the PET to impregnate the mat. The rate of cooling allows for formation of crystals in the PET.

The laminates made in accordance with example 1 were molded into boxes. The laminates were in a sizing of 1/2 16.5 cm (6 inches) to 25.4 cm (10 inches) and weighed 415 to 430 grams and were heated to a temperature of 288˚C (550˚F) within a residence time of 4 to 5 minutes. These laminates were molded in a hot die mold at a temperature of 143˚C to 177˚C (290˚F to 350˚F) with a stamping tonnage of 60 tons (6 x $10^4$ kg), a pressure of 1.1 x $10^6$ − 1,0 x $10^6$ $kg/m^2$ (100 to 150 tons/$ft^2$) and dwell time of 45 seconds.

The laminates prepared in accordance with Example 1 were split into two groups. One group was sealed and the other group was unsealed and both groups were exposed to elevated temperatures and elevated humidity conditions for a period of time. Stamped boxes were prepared from the laminates in accordance with Figure 4 and Example 1. This test was to assess the effects of moisture on stamped part properties. The two environmental conditions were 43˚C (110˚F) at 100 percent relative humidity and 32˚C (90˚F) at 70 percent relative humidity. The group of sealed laminates were sealed in high − density polyethylene (HDPE) bags as soon as fabricated and exposed along with the unsealed laminates to the above environmental conditions. Laminates were taken periodically up to a period of 30 days from these environments and prepared into stamped boxes. The stamped boxes were then measured for their physical properties. The flexural strength and flexural modulus tests were conducted in accordance with standard ASTM tests. The results are shown in Table 1. From Table 1, it is shown that moisture has a minimal effect when the molded parts and laminates are prepared in accordance with the present invention. There were no large variations in the mechanical properties of the boxes from the two groups.

11

EP 0 221 336 B1

TABLE 1

EFFECT OF MOISTURE IN STAMPING

STAMPED BOX PROPERTIES

(1)43°C (110°F)- 100% RH EXPOSURE

| | UNSEALED | | SEALED | |
|---|---|---|---|---|
| NO. OF DAYS | FLEXURAL STRENGTH $(X\ 10^3\ psi)/kPa$ | FLEXURAL MODULUS $(X\ 10^6\ psi)/kPa$ | FLEXURAL STRENGTH $(X\ 10^3\ psi)/kPa$ | FLEXURAL MODULUS $(X\ 10^6\ psi)/kPa$ |
| 0 | 25.0/172.38 | 1.11/7.65 | 25.0/172.38 | 1.11/7.65 |
| 5 | 24.7/170.31 | 1.17/8.07 | 25.6/176.51 | 1.20/8.27 |
| 10 | 22.8/157.21 | 1.10/7.58 | 23.0/158.59 | 1.11/7.65 |
| 30 | 26.8/184.79 | 1.17/8.07 | 25.0/172.38 | 1.08/7.45 |

(2)32°C (90°F)- 70% RH EXPOSURE

| | | | | |
|---|---|---|---|---|
| 0 | 25.0/172.38 | 1.11/7.65 | 25.0/172.38 | 1.11/7.65 |
| 10 | 24.7/170.31 | 1.12/7.72 | 25.8/177.89 | 1.18/8.14 |
| 30 | 24.3/167.55 | 1.12/7.72 | 25.4/175.13 | 1.14/7.86 |

## Claims

1. Process for producing molded glass fiber reinforced poly(ethylene terephthalate) – containing articles where one or more needled mats of glass fibers are laminated with dried poly(ethylene terephthalate) in one or more layers, the laminate is molded under pressure at a temperature in the range of 120°C to 220°C (250°F to 325°F) with a dwell time of less than 60 seconds whereby the heated laminate cools and develops crystallinity

   **characterized by**
   (a) treating the formed glass fibers with an aqueous chemical treating composition comprising
      1. organic silane coupling agents selected from epoxy – functional, organo silane coupling agents and a mixture of epoxy – functional and amino – functional organo silane coupling agents present in an amount of 0.1 to 2 weight percent of the solids of the aqueous chemical treating composition,
      2. polyamino amide cationic lubricant which is a partially amidated polyalkylene amine prepared by condensation with fatty acids, where at least one of the fatty acids is pelargonic acid present in an amount of 1 to 3 weight percent of the solids of the aqueous chemical treating composition,
      3. an aqueous soluble, dispersible or emulsifiable bisphenol polyester resin film forming polymer present in an amount of the remainder of the solids of the aqueous chemical treating composition and
      4. water in an amount to give total solids of the aqueous chemical treating composition in the range of 1 to 20 weight percent wherein the dried residue is present on the glass fibers in an amount of 0.1 to 8 weight percent LOI.

EP 0 221 336 B1

(b) gathering the glass fibers into one or more strands and forming into layers of strands on a moving horizontal surface where the layers are dried to have a substantially reduced moisture content and are needled into mat,

(c) drying the needled mat in a second drying step to remove residual moisture to result in a moisture content of less than 0.3 weight percent of the mat,

(d) modifying the rate of crystallization of the dried poly(ethylene terephthalate) to have a rate of crystallization to yield about at least 30 weight percent crystallization at a temperature of 120°C to 220°C in 5 to 60 seconds and

(e) laminating the one or more needled mats with the modified poly(ethylene terephthalate) where the lamination temperature is above the melting point of the poly(ethylene terephthalate) for an effective laminating residence time,

(f) cooling the laminate to a temperature of at least around 66°C (150°F) at a rate to produce at least 30 percent crystallinity in the laminate,

(g) dimensioning the laminate to suit the volume and dimensional requirements of the finished molded piece,

(h) heating the dimensioned laminate to the melting point of the PET at a rate to drive off any moisture from the laminate before reaching the melting point of the PET,

(i) developing during molding and cooling of the heated laminate a crystallinity of at least 30 weight percent.

2. Process for producing molded glass fiber reinforced poly(ethylene terephthalate) – containing articles where one or more needled mats of glass fibers are laminated with dried poly(ethylene terephthalate) in one or more layers, the laminate is molded under pressure at a temperature in the range of 120°C to 220°C (250°F to 325°F) with a dwell time of less than 60 seconds whereby the heated laminate cools and develops crystallinity

**characterized by**

(a) treating the formed glass fibers with an aqueous chemical treating composition comprising

1. gamma glycidylpropyltrimethoxy silane as an organic silane coupling agent present in an amount of 2 to 5 weight percent of the solids of the aqueous chemical treating composition,

2. polyamino amide cationic lubricant which is a partially amidated polyalkylene amine prepared by condensation with fatty acids, where at least one of the fatty acids is pelargonic acid present in an amount of 1 to 3 weight percent of the solids of the aqueous chemical treating composition,

3. an aqueous emulsion or disperion of a bis – phenol A polyester film forming polymer having internal emulsification through ethoxylation and having a weight average molecular weight in the range of 30,000 to 45,000 in an amount of the remainder of the solids of the aqueous chemical treating composition and

4. water in an amount to give total solids of the aqueous chemical treating composition in the range of 1 to 20 weight percent wherein the dried residue is present on the glass fibers in an amount of 0.1 to 8 weight percent LOI.

(b) gathering the glass fibers into one or more strands and forming into layers of strands on a moving horizontal surface where the layers are dried to have a substantially reduced moisture content and are needled into mat,

(c) drying the needled mat in a second drying step to remove residual moisture to result in a moisture content of less than 0.3 weight percent of the mat,

(d) modifying the rate of crystallization of the dried poly(ethylene terephthalate) to have a rate of crystallization to yield about at least 30 weight percent crystallization at a temperature of 120°C to 220°C in 5 to 60 seconds and

(e) laminating the one or more needled mats with the modified poly(ethylene terephthalate) where the lamination temperature is above the melting point of the poly(ethylene terephthalate) for an effective laminating residence time,

(f) cooling the laminate to a temperature of at least around 66°C (150°F) at a rate to produce at least 30 percent crystallinity in the laminate,

(g) dimensioning the laminate to suit the volume and dimensional requirements of the finished molded piece,

(h) heating the dimensioned laminate to the melting point of the PET at a rate to drive off any moisture from the laminate before reaching the melting point of the PET,

(i) developing during molding and cooling of the heated laminate a crystallinity of at least 30 weight percent.

13

**3.** Process of Claims 1 – 2, wherein the forming of the layers of strands involves: drying the glass fiber strands in a first drying step to have a moisture content of less than around 8 weight percent, depositing the dried strands into layers, and drying the layers to have a moisture content less than 1 weight percent for needling.

**4.** Process of Claim 3, wherein drying of the layers is conducted by air drying.

**5.** Process of Claims 1 – 4, wherein lamination is with two needled mats and two overlays of modified poly(ethylene terephthalate) and one extruded layer of poly(ethylene terephthalate) intermediate the two needled mats and wherein the lamination is conducted under pressure.

**6.** Process of Claims 1 – 5, wherein the cooling rate after lamination is in the range of 0,5°C to 3,4°C/sec. (1°F to 6°F/second) to reduce the temperature of the laminate to around 66°C (150°F).

**7.** Process of Claims 1 – 6, wherein the modified poly(ethylene terephthalate) is modified to give a rate of crystallization to result in at least 30 to 50 weight percent crystallization when the PET is cooled from melt to a temperature of 120°C to 220°C in a time period in the range of 5 to 60 seconds.

**8.** Process of Claims 1 – 7, wherein the dimensioned laminates are preheated with an infrared heater at a speed through the heater to result in the heating rate in the range of 0,5°C to 1,7°C/sec. (1°F to 3°F/sec) to a temperature sufficient to melt the poly(ethylene terephthalate).

**9.** Process of Claims 1 – 8, wherein the preheated dimensioned laminates are molded at a temperature in the range of 120 to 160°C for 30 to 40 seconds dwell time to induce crystallization in the molded article of 30 to 50 weight percent.

**10.** Process of Claims 1 – 9, wherein the formation of the layers of strands of glass fiber occurs prior to the first drying step.

**11.** Process of Claims 1 – 10, wherein the amount of nucleating agent in the PET is in the range of 0.1 to 1 weight percent of resin.

**12.** Process of Claims 1 – 11, wherein in laminating there is an effective laminating pressure and wherein the amount of the glass fibers in the laminate is in the range of 5 to 200 parts per 100 parts of poly – (ethylene terephthalate).

**13.** Process of Claims 1 – 12, wherein the laminates are wrapped in a moisture impermeable membrane.

**14.** Process of Claims 1 – 13, wherein the preheated dimensioned laminates are molded at a temperature in the range of 120 to 160°C for 30 to 40 seconds dwell time to induce crystallization in the molded article of 30 to 50 weight percent.

**15.** Molded glass fiber reinforced poly(ethylene terephthalate) produced by the process of Claims 1 – 14.

**Patentansprüche**

**1.** Verfahren zum Herstellen von glasfaserverstärkten, Poly(ethylenterephthalat) enthaltenden Formkörpern durch Laminieren von einer oder mehreren genadelten Glasfasermatten mit einer oder mehreren Schichten trockenem Poly(ethylenterephthalat), Ausformen des Laminats unter Druck bei einer Temperatur im Bereich von 120°C bis 220°C (250°F bis 325°F) mit einer Verweilzeit unter 60s, wobei das erwärmte Laminat sich abkühlt und kristallisiert,
**gekennzeichnet durch**
  (a) Behandeln der gebildeten Glasfasern mit einer wäßrigen chemischen Behandlungszusammen – setzung, enthaltend
    I. organisches Silankupplungsmittel, ausgewählt aus epoxyfunktionellen Organosilankupplungs – mitteln und einer Mischung von epoxyfunktionellen und aminofunktionellen Organosilankupp – lungsmitteln, anwesend in einer Menge von 0,1 bis 2 Gew. – % der Feststoffe der wäßrigen chemischen Behandlungszusammensetzung,

II. kationisches Polyamin – Amid – Gleitmittel, das ein teilweise amidiertes Polyalkylenamin ist, hergestellt durch Kondensation mit Fettsäuren, wobei mindestens eine der Fettsäuren Pelargon – säure ist, anwesend in einer Menge von 1 bis 3 Gew. – % der Feststoffe der wäßrigen chemi – schen Behandlungszusammensetzung,

III. ein in Wasser lösliches, dispergierbares oder emulgierbares Bisphenol – Polyesterharz, wobei das filmbildende Polymer in einer Menge der verbleibenden Feststoffe der wäßrigen chemischen Behandlungszusammensetzung anwesend ist, und

IV. Wasser in einer Menge, die einen Feststoffgehalt der wäßrigen chemischen Behandlungszu – sammensetzung im Bereich von 1 bis 20 Gew. – % ergibt, wobei der getrocknete Rückstand auf den Glasfasern in einer Menge von 0,1 bis 8 Gew. – % Glühverlust (LOI) vorhanden ist,

(b) Zusammenfassen der Glasfasern zu einem oder mehreren Strängen und Ausbilden von Faser – strangschichten auf einer sich horizontal bewegenden Oberfläche, wobei die Schichten getrocknet werden, bis sie einen wesentlich verringerten Feuchtigkeitsgehalt aufweisen, und Nadeln zu einer Matte,

(c) Trocknen der genadelten Matte in einem zweiten Trockenschritt, um die verbleibende Feuchtig – keit zu entfernen, bis der Feuchtigkeitsgehalt der Matte kleiner als 0,3 Gew. – % beträgt,

(d) Verändern der Kristallisationsgeschwindigkeit des getrockneten Poly(ethylenterephthalats), so daß es eine Kristallisationsgeschwindigkeit aufweist, die bei einer Temperatur von 120 ˚ C bis 220 ˚ C in 5 bis 60s mindestens etwa 30 Gew. – % Kristallisation ergibt, und

(e) Laminieren einer oder mehrerer genadelter Matten mit dem modifizierten Poly – (ethylenterephthalat), wobei die Laminiertemperatur für eine wirksam laminierende Aufenthaltszeit über dem Schmelzpunkt des Poly(ethylenterephthalats) liegt,

(f) Abkühlen des Laminats auf eine Temperatur von mindestens etwa 66 ˚ C (150 ˚ F) mit einer Geschwindigkeit, die mindestens 30% Kristallisation im Laminat ergibt,

(g) Dimensionieren des Laminats auf das passende Volumen und die geforderten Dimensionen des fertig geformten Stückes,

(h) Erwärmen des dimensionierten Laminats auf den Schmelzpunkt des PET mit einer solchen Geschwindigkeit, daß alle Feuchtigkeit aus dem Laminat vor Erreichen des Schmelzpunktes des PET entfernt ist,

(i) Entwickeln einer Kristallisation von mindestens 30 Gew. – % während des Ausformens und Abkühlens des erwärmten Laminats.

**2.** Verfahren zum Herstellen von glasfaserverstärkten, Poly(ethylenterephthalat) enthaltenden Formkörpern durch Laminieren von einer oder mehreren genadelten Glasfasermatten mit einer oder mehreren Schichten trockenem Poly(ethylenterephthalat), Ausformen des Laminats unter Druck bei einer Tem – peratur im Bereich von 120 ˚ C bis 220 ˚ C (250 ˚ F bis 325 ˚ F) mit einer Verweilzeit unter 60s, wobei das erwärmte Laminat sich abkühlt und kristallisiert,

**gekennzeichnet durch**

(a) Behandeln der gebildeten Glasfasern mit einer wäßrigen chemischen Behandlungszusammen – setzung, enthaltend

I. gamma – Glycidylpropyltrimethoxysilan als Organosilankupplungsmittel, anwesend in einer Menge von 2 bis 5 Gew. – % der Feststoffe der wäßrigen chemischen Behandlungszusammen – setzung,

II. kationisches Polyamin – Amid – Gleitmittel, das ein teilweise amidiertes Polyalkylenamin ist, hergestellt durch Kondensation mit Fettsäuren, wobei mindestens eine der Fettsäuren Pelargon – säure ist, anwesend in einer Menge von 1 bis 3 Gew. – % der Feststoffe der wäßrigen chemi – schen Behandlungszusammensetzung,

III. eine wäßrige Emulsion oder Dispersion eines filmbildenden Bisphenol – A – Polyesterpolyme – ren mit innerer Emulgierung durch Ethoxylierung und mit einem gewichtsmittleren Molekularge – wicht im Bereich von 30.000 bis 45.000 in einer Menge der verbleibenden Feststoffe der wäßrigen chemischen Behandlungszusammensetzung und,

IV. Wasser in einer Menge, die einen Feststoffgehalt der wäßrigen chemischen Behandlungszu – sammensetzung im Bereich von 1 bis 20 Gew. – % ergibt, wobei der getrocknete Rückstand auf den Glasfasern in einer Menge von 0,1 bis 8 Gew. – % Glühverlust (LOI) vorhanden ist,

(b) Zusammenfassen der Glasfasern zu einem oder mehreren Strängen und Ausbilden von Faser – strangschichten auf einer sich horizontal bewegenden Oberfläche, wobei die Schichten getrocknet werden, bis sie einen wesentlich verringerten Feuchtigkeitsgehalt aufweisen, und Nadeln zu einer Matte,

(c) Trocknen der genadelten Matte in einem zweiten Trockenschritt, um die verbleibende Feuchtig - keit zu entfernen, bis der Feuchtigkeitsgehalt der Matte kleiner als 0,3 Gew. – % beträgt,

(d) Verändern der Kristallisationsgeschwindigkeit des getrockneten Poly(ethylenterephthalats), so daß es eine Kristallisationsgeschwindigkeit aufweist, die bei einer Temperatur von 120°C bis 220°C in 5 bis 60s mindestens etwa 30 Gew. – % Kristallisation ergibt, und

(e) Laminieren einer oder mehrerer genadelter Matten mit dem modifizierten Poly - (ethylenterephthalat), wobei die Laminiertemperatur für eine wirksam laminierende Aufenthaltszeit über dem Schmelzpunkt des Poly(ethylenterephthalats) liegt,

(f) Abkühlen des Laminats auf eine Temperatur von mindestens etwa 66°C (150°F) mit einer Geschwindigkeit, die mindestens 30% Kristallisation im Laminat ergibt,

(g) Dimensionieren des Laminats auf das passende Volumen und die geforderten Dimensionen des fertig geformten Stückes,

(h) Erwärmen des dimensionierten Laminats auf den Schmelzpunkt des PET mit einer solchen Geschwindigkeit, daß alle Feuchtigkeit aus dem Laminat vor Erreichen des Schmelzpunktes des PET entfernt ist,

(i) Entwickeln einer Kristallisation von mindestens 30 Gew. – % während des Ausformens und Abkühlens des erwärmten Laminats.

3. Verfahren nach Ansprüchen 1 und 2,
**dadurch gekennzeichnet,**
daß das Ausbilden der Strangschichten Trocknen der Glasfaserstränge in einem ersten Trockenschritt auf einen Feuchtigkeitsgehalt unter etwa 8 Gew. – %, Ablagern der getrockneten Stränge in Schichten und Trocknen der Schichten auf einen Feuchtigkeitsgehalt unter 1 Gew. – % zum Nadeln einschließt.

4. Verfahren nach Anspruch 3,
**dadurch gekennzeichnet,**
daß das Trocknen der Schichten mit Luft erfolgt.

5. Verfahren nach Ansprüchen 1 bis 4,
**dadurch gekennzeichnet,**
daß zwei genadelte Matten und zwei Deckschichten aus modifiziertem Poly(ethylenterephthalat) und eine extrudierte Schicht von Poly(ethylenterephthalat) als Zwischenschicht zwischen den zwei gena - delten Matten unter Druck laminiert werden.

6. Verfahren nach Ansprüchen 1 bis 5,
**dadurch gekennzeichnet,**
daß die Abkühlgeschwindigkeit nach dem Laminieren im Bereich von 0,5°C bis 3,4°C/s (1°F bis 6°F/s) beträgt, um die Temperatur des Laminats auf etwa 66°C (150°F) zu reduzieren.

7. Verfahren nach Ansprüchen 1 bis 6,
**dadurch gekennzeichnet,**
daß das modifizierte Poly(ethylenterephthalat) so modifiziert ist, daß es eine Kristallisationsgeschwin - digkeit aufweist, die mindestens 30 bis 50 Gew. – % Kristallisation ergibt, wenn das PET von der Schmelze auf eine Temperatur von 120°C bis 220°C in einer Zeit im Bereich von 5 bis 60s abgekühlt wird.

8. Verfahren nach Ansprüchen 1 bis 7,
**dadurch gekennzeichnet,**
daß die dimensionierten Laminate mit einem Infrarotheizer bei einer solchen Durchlaufgeschwindigkeit vorgeheizt werden, daß die Erwärmungsgeschwindigkeit im Bereich von 0,5°C bis 1,7°C/s (1°F bis 3°F/s) beträgt, bis zu einer zum Schmelzen des Poly(ethylenterephthalats) ausreichenden Temperatur.

9. Verfahren nach Ansprüchen 1 bis 8,
**dadurch gekennzeichnet,**
daß die dimensionierten, vorgeheizten Laminate bei einer Temperatur im Bereich von 120 bis 160°C mit einer Verweilzeit von 30 bis 40s ausgeformt werden, um im geformten Erzeugnis eine Kristallisation von 30 bis 50 Gew. – % zu erzeugen.

**10.** Verfahren nach Ansprüchen 1 bis 9,
**dadurch gekennzeichnet,**
daß das Ausbilden der Schichten von Glasfastersträngen vor dem ersten Trockenschritt erfolgt.

**11.** Verfahren nach Ansprüchen 1 bis 10,
**dadurch gekennzeichnet,**
daß die Menge an Keimbildner im PET im Bereich von 0,1 bis 1 Gew.-% des Harzes liegt.

**12.** Verfahren nach Ansprüchen 1 bis 11,
**dadurch gekennzeichnet,**
daß beim Laminieren ein wirksamer Laminierdruck angewandt wird und der Gehalt an Glasfasern im Laminat im Bereich von 5 bis 200 Teilen pro 100 Teile Poly(ethylenterephthalat) beträgt.

**13.** Verfahren nach Ansprüchen 1 bis 12,
**dadurch gekennzeichnet,**
daß die Laminate in einer feuchtigkeitsundurchlässigen Membrane verpackt sind.

**14.** Verfahren nach Ansprüchen 1 bis 13,
**dadurch gekennzeichnet,**
daß die vorgeheizten, dimensionierten Laminate bei einer Temperatur im Bereich von 120 bis 160°C mit einer Verweilzeit von 30 bis 40s ausgeformt werden, um im ausgeformten Erzeugnis eine Kristallisation von 30 bis 50 Gew.-% zu erzeugen.

**15.** Ausgeformtes, glasfaserverstärktes Poly(ethylenterephthalat), hergestellt durch das Verfahren nach Ansprüchen 1 bis 14.

**Revendications**

**1.** Procédé de production d'articles contenant du poly(téréphtalate d'éthylène) renforcés de fibres de verre, moulés, conformément auquel un ou plusieurs mats aiguilletés de fibres de verre sont stratifiés avec du poly(téréphtalate d'éthylène) en une ou plusieurs couches, le stratifié est moulé sous pression à une température qui varie de 120°C à 220°C (250°F à 325°F) avec une durée de séjour inférieure à 60 secondes, si bien que le stratifié chauffé se refroidit et développe une cristallinité,
caractérisé en ce que
(a) on traite les fibres de verre formées par une composition de traitement chimique aqueuse, qui comprend
1. des agents de couplage organosilaniques, choisis parmi les agents de couplage organosilaniques à fonctions époxy et un mélange d'agents de couplage organosilaniques à fonctions époxy et à fonctions amino, présents en une proportion de 0,1 à 2% en poids des solides de la composition de traitement chimique aqueuse,
2. un lubrifiant cationique du type polyaminoamide, qui est une polyalkylèneamine partiellement amidée, préparée par condensation avec des acides gras, où au moins l'un des acides gras est l'acide pélargonique, présent en une proportion de 1 à 3% en poids des solides de la composition de traitement chimique aqueuse,
3. un polymère filmogène en résine de polyester de bisphénol, émulsifiable, dispersible, ou soluble dans l'eau, présent en une proportion correspondant au reste des solides de la composition de traitement chimique aqueuse et
4. de l'eau en une proportion telle qu'elle donne une teneur totale en solides à la composition de traitement chimique aqueuse, qui fluctue de 1 à 20% en poids, où le résidu séché est présent sur les fibres de verre en une proportion de 0,1 à 8% en poids PAF,
(b) on rassemble les fibres de verre en un ou plusieurs fils et on les façonne en couches de fils sur une surface horizontale en déplacement où les couches sont séchées de manière à comporter une teneur en humidité sensiblement réduite et sont aiguilletées en un mat,
(c) on sèche le mat aiguilleté au cours d'une seconde étape de séchage, de manière à éliminer l'humidité résiduelle et à conférer une teneur en humidité inférieure à 0,3% en poids au mat,
(d) on modifie le taux de cristallisation du poly(téréphtalate d'éthylène) séché de manière à parvenir à un taux de cristallisation tel qu'il donne environ au moins 30% en poids de cristallisation à une température de 120°C à 220°C en l'espace de 5 à 60 secondes,

17

(e) on stratifie le ou les mats aiguilletés avec le poly(téréphtalate d'éthylène) modifié, où la température de stratification est supérieure au point de fusion du poly(téréphtalate d'éthylène), pendant une durée de stratification efficace,

(f) on refroidit le stratifié jusqu'à une température d'au moins environ 66°C (150°F) à une vitesse qui engendre au moins 30% de cristallinité dans le stratifié,

(g) on dimensionne le stratifié de manière à l'adapter aux besoins volumiques et dimensionnels de l'article moulé fini,

(h) on chauffe le stratifié mis au gabarit jusqu'au point de fusion du poly(téréphtalate d'éthylène), à une vitesse telle que l'on chasse toute humidité du stratifié avant d'atteindre le point de fusion du poly(téréphtalate d'éthylène) et

(i) au cours du moulage et du refroidissement du stratifié chauffé, on développe une cristallinité d'au moins 30% en poids.

**2.** Procédé de production d'articles contenant du poly(téréphtalate d'éthylène) renforcés de fibres de verre, moulés, conformément auquel un ou plusieurs mats aiguilletés de fibres de verre sont stratifiés avec du poly(téréphtalate d'éthylène) en une ou plusieurs couches, le stratifié est moulé sous pression à une température qui varie de 120°C à 220°C (250°F à 325°F) avec une durée de séjour inférieure à 60 secondes, si bien que le stratifié chauffé se refroidit et développe une cristallinité, caractérisé en ce que

(a) on traite les fibres de verre formées par une composition de traitement chimique aqueuse, qui comprend

1. du $\gamma$−glycidylpropyltriméthoxysilane en tant qu'agent de couplage organosilanique, présent en une proportion de 2 à 5% en poids des solides de la composition de traitement chimique aqueuse,

2. un lubrifiant cationique du type polyaminoamide, qui est une polyalkylèneamine partiellement amidée, préparée par condensation avec des acides gras, où au moins l'un des acides gras est l'acide pélargonique, présent en une proportion de 1 à 3% en poids des solides de la composition de traitement chimique aqueuse,

3. une dispersion ou émulsion aqueuse d'un polymère filmogène de polyester de bisphénol A comportant une émulsification interne par éthoxylation et possédant un poids moléculaire moyen en poids qui varie de 30.000 à 45.000, en une proportion correspondant au reste des solides de la composition de traitement chimique aqueuse et

4. de l'eau en une proportion telle qu'elle donne une teneur totale en solides à la composition de traitement chimique aqueuse, qui fluctue de 1 à 20% en poids, où le résidu séché est présent sur les fibres de verre en une proportion de 0,1 à 8% en poids PAF,

(b) on rassemble les fibres de verre en un ou plusieurs fils et on les façonne en couches de fils sur une surface horizontale en déplacement où les couches sont séchées de manière à comporter une teneur en humidité sensiblement réduite et sont aiguilletées en un mat,

(c) on sèche le mat aiguilleté au cours d'une seconde étape de séchage, de manière à éliminer l'humidité résiduelle et à conférer une teneur en humidité inférieure à 0,3% en poids au mat,

(d) on modifie le taux de cristallisation du poly(téréphtalate d'éthylène) séché de manière à parvenir à un taux de cristallisation tel qu'il donne environ au moins 30% en poids de cristallisation à une température de 120°C à 220°C en l'espace de 5 à 60 secondes,

(e) on stratifie le ou les mats aiguilletés avec le poly(téréphtalate d'éthylène) modifié, où la température de stratification est supérieure au point de fusion du poly(téréphtalate d'éthylène), pendant une durée de stratification efficace,

(f) on refroidit le stratifié jusqu'à une température d'au moins environ 66°C (150°F) à une vitesse qui engendre au moins 30% de cristallinité dans le stratifié,

(g) on dimensionne le stratifié de manière à l'adapter aux besoins volumiques et dimensionnels de l'article moulé fini,

(h) on chauffe le stratifié mis au gabarit jusqu'au point de fusion du poly(téréphtalate d'éthylène), à une vitesse telle que l'on chasse toute humidité du stratifié avant d'atteindre le point de fusion du poly(téréphtalate d'éthylène) et

(i) au cours du moulage et du refroidissement du stratifié chauffé, on développe une cristallinité d'au moins 30% en poids.

**3.** Procédé suivant les revendications 1−2, caractérisé en ce que la formation des couches de fils implique le séchage des fils des fibres de verre au cours d'une première étape de séchage, de manière à parvenir à une teneur en humidité inférieure à environ 8% en poids, le dépôt de fils séchés en couches et le séchage des couches pour parvenir à une teneur en humidité inférieure à 1% en poids en vue de l'aiguilletage.

4.  Procédé suivant la revendication 3, caractérisé en ce que le séchage des couches s'effectue par séchage à l'air.

5.  Procédé suivant les revendications 1 – 4, caractérisé en ce que la stratification s'opère avec deux mats aiguilletés et deux couches de recouvrement en poly(téréphtalate d'éthylène) modifié et une couche extrudée de poly(téréphtalate d'éthylène) intermédiaire aux deux mats aiguilletés et on opère la stratification sous pression réduite.

6.  Procédé suivant les revendications 1 – 5, caractérisé en ce que la vitesse de refroidissement après stratification varie de 0,5˚C à 3,4˚C/sec. (1˚F à 6˚F/seconde) de manière à réduire la température du stratifié jusqu'à environ 66˚C (150˚F).

7.  Procédé suivant les revendications 1 – 6, caractérisé en ce que le poly(téréphtyalate d'éthylène) modifié est modifié de manière à parvenir à un taux de cristallisation tel qu'il donne au moins 30% à 50% en poids de cristallisation lorsque le poly(téréphtalate d'éthylène) est refroidi depuis l'état fondu jusqu'à une température de 120 à 220˚C en une période qui fluctue de 5 à 60 secondes.

8.  Procédé suivant les revendications 1 à 7, caractérisé en ce que les stratifiés mis au gabarit sont préchauffés dans une installation de chaufffage à infrarouge en passant à une vitesse telle à travers l'installation de chauffage que l'on parvienne à une vitesse de chauffage de 0,5˚C à 1,7˚C/sec. (1˚F à 3˚F/sec) à une température qui suffit à faire fondre le poly(téréphtalate d'éthylène).

9.  Procédé suivant les revendications 1 – 8, caractérisé en ce que le stratifiés mis au gabarit, préchauffés, sont moulés à une température qui varie de 120 à 160˚C avec une durée de séjour de 30 à 40 secondes de manière à induire de 30 à 50% en poids de cristallisation dans l'article moulé.

10. Procédé suivant les revendications 1 – 9, caractérisé en ce que la formation des couches de fils de fibres de verre s'opère avant la première étape de séchage.

11. Procédé suivant les revendications 1 – 10, caractérisé en ce que la proportion de l'agent de nucléation dans le poly(téréphtalate d'éthylène) varie de 0,1 à 1% en poids de la résine.

12. Procédé suivant les revendications 1 – 11, caractérisé en ce qu'au cours de la stratification on exerce une pression de stratification efficace et en ce que la proportion des fibres de verre dans le stratifié varie de 5 à 200 parties par 100 parties de poly(téréphtalate d'éthylène).

13. Procédé suivant les revendications 1 – 12, caractérisé en ce que les stratifiés sont enveloppés d'une membrane imperméable à l'humidité.

14. Procédé suivant les revendications 1 – 13, caractérisé en ce que les stratifiés mis au gabarit, préchauf – fés, sont moulés à une température qui varie de 120 à 160˚C avec une durée de séjour de 30 à 40 secondes pour induire de 30 à 50% en poids de cristallisation dans l'article moulé.

15. Poly(téréphtalate d'éthylène) renforcé de fibres de verre et moulé, produit par mise en oeuvre du procédé selon l'une quelconque des revendications 1 – 14.

FIG.1

FIG. 2

FIG. 3

FIG. 4

EP 0 221 336 B1